# EUROPÄISCHE PATENTANMELDUNG

(11) **EP 3 859 049 A1**
(43) Veröffentlichungstag der Anmeldung: **04.08.2021**
(21) Anmeldenummer: 20154460.8
(22) Anmeldetag: 30.01.2020
(51) Int. Cl.: C25B 1/04, C25B 11/03, C25B 11/04

(54) **GASDIFFUSIONSELEKTRODE FÜR EIN ELEKTROCHEMISCHES SYSTEM ZUR WASSERSPALTUNG**

(71) Anmelder: Siemens Aktiengesellschaft, 80333 München (DE)
(72) Erfinder: Jensen, Jens Dahl, 14050 Berlin (DE); Krüger, Ursus, 14089 Berlin (DE); Neubert, Heinz, 73095 Albershausen (DE); Therkildsen, Kasper Tipsmark, 4623 Lille-Skensved (DK); Winkler, Gabriele, 13587 Berlin (DE)

(57) **Zusammenfassung**

Beschrieben wird eine Gasdiffusionselektrode aufweisend eine gasdurchlässige Schicht (10) und eine elektrisch leitfähige Schicht (9), wobei die elektrisch leitfähige Schicht (9) ein Katalysatormaterial aufweist, welches auf einem Trägermaterial (7, 8) aufgebracht ist, wobei die Maße des Trägermaterials (7, 8) im Nano- oder Mikrobereich liegen und die Geometrien des Trägermaterials ein hohes Aspektverhältnis aufweisen sowie ein elektrochemische System zur elektrochemischen Wasserspaltung umfassend eine Kathode, an welcher die Wasserstoffentwicklungsreaktion erfolgt und eine Anode, an welcher die Sauerstoffentwicklungsreaktion erfolgt, wobei die Anode eine erfindungsgemäße Gasdiffusionselektrode ist.

## Beschreibung

Die vorliegende Erfindung betrifft eine Gasdiffusionselektrode mit einem Katalysatormaterial sowie ein elektrochemisches System umfassend eine derartige Gasdiffusionselektrode, wobei das Katalysatormaterial bzw. das elektrochemische System geeignet sind, Wasser elektrochemisch zu spalten und Wasserstoff sowie Sauerstoff zu entwickeln.

### Stand der Technik

Aktuell stellt die Produktion von Wasserstoffgas eine attraktive Speicherlösung für Energie aus erneuerbaren Quellen wie Wind, Wasser und Sonne dar. Dafür wird in einem elektrochemischen System eine Wasserstoffentwicklungsreaktion an einer Kathode sowie eine Sauerstoffentwicklungsreaktion an einer Anode betrieben. Dabei handelt es sich um kinetisch sehr träge Reaktionen, die wirksame Elektrokatalysatoren erfordern, um den Energiebedarf für die Spaltung zu reduzieren bzw. die Spaltungsrate zu steigern.

Die aktuell eingesetzten wirksamsten Elektrokatalysatoren sind die Metalle und Oxide aus der Platingruppe. Unter der Platingruppe, auch Nickelgruppe genannt, werden die Elemente Nickel (Ni), Palladium (Pd) und Platin (Pt) zusammengefasst. Diese Elemente der Platingruppe sind in der Erdkruste sehr selten vorhanden und dementsprechend teuer für eine zunehmende Skalierbarkeit in den neuen Prozessen der Energieumwandlung. Bisher wird beispielsweise versucht durch Synthese neuer Produkte, die katalytische Reaktivität von Platingruppenelementen zu verbessern und dadurch ihre eingesetzte Menge zu minimieren.

Bisher kommen beispielsweise kommerziell erhältliche Iridium basierte Katalysatoren wie z. B. Iridiumdioxid IrO₂, Iridiumdioxid auf Titandioxid TiO₂ oder ATO-Partikel (Antimon-Zinnoxid) mit Iridiumdioxid IrO₂ zum Einsatz. Letztere werden beispielsweise durch Reduktion eines anorganischen Präkursors wie Iridium (III)-chlorid mittels eines Reduktionsmittels, z.B. Natriumborhydrid NaBH₄ in wasserfreiem Ethanol unter Beimischung von Inertgas oder durch Dihydrogenhexachlorididate (IV)Hydrate H₂IrCl₆xH₂O) und als Reduktionsmittel Ethylenglykol bei einem pH-Wert von 11 in destilliertem Wasser unter Schutzgas, Ultraschall und Erhitzen erzeugt. Die Katalysatorpartikel werden beispielsweise mit 2-Propanol, destilliertem Wasser und einer ca. 15 bis 20%igen Nafion-Inomerlösung als Bindemittel und zum Ladungstransport an die Stromkollektoren zu einer Tinte verarbeitet. Dann wird die Tinte entweder direkt durch ein Spritz- oder Rakelverfahren oder direkt über das Decalverfahren über eine Transferfolie auf die Membran der Gasdiffusionselektrode aufgetragen.

Bisher kommt für die elektrochemische Wasserspaltung bevorzugt ein elektrochemisches System zum Einsatz, welches als Elektroden je eine Gasdiffusionselektrode aufweist, auf, in oder an welchen Gasdiffusionselektroden oben beschriebene Elektrokatalysatoren angebracht sind.

Die Speicherung von Energie aus erneuerbaren Quellen wie Wind, Wasser und Sonne soll für eine ökonomisch sinnvolle Versorgung und Verteilung speicherbar gemacht werden. Dazu muss die Ressourcenendlichkeit der Elektrokatalysatoren berücksichtigt werden.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung bei gleicher oder verbesserter Umsetzungsrate eine Reduktion der notwendigen Katalysatormenge ermöglichen.

Diese der vorliegenden Erfindung zugrunde liegende Aufgabe wird durch eine Gasdiffusionselektrode gemäß dem Patentanspruch 1 gelöst sowie durch ein elektrochemisches System gemäß dem Patentanspruch 12. Vorteilhafte Ausgestaltungen der Erfindung sind Gegenstand der Unteransprüche.

### Beschreibung der Erfindung

Die erfindungsgemäße Gasdiffusionselektrode weist eine gasdurchlässige Schicht, eine elektrisch leitfähige Schicht auf, wobei die elektrisch leitfähige Schicht ein Katalysatormaterial aufweist, welches auf einem Trägermaterial aufgebracht ist, wobei die Maße des Trägermaterials im Nano- oder Mikrobereich liegen und die Geometrien des Trägermaterials ein hohes Aspektverhältnis aufweisen.
Zweckdienlicherweise wird ein Katalysatormaterial eingesetzt, welches die elektrochemische Wasserspaltungsreaktion begünstigt.
Der Vorteil der erfindungsgemäßen Gasdiffusionselektrode für die elektrochemische Wasserstofferzeugung liegt beispielsweise darin, besonders robust und gastechnisch erosionsstabil sowie korrosionsstabil zu sein.
Das Katalysatormaterial ist insbesondere in Form einer Beschichtung auf das Trägermaterial aufgebracht. Die Katalysatormenge kann dazu durch eine Reduzierung der Partikelgröße für die Beschichtung der Trägermaterialien minimiert werden. Durch die Auftragung auf die Trägermaterialien mit hohem Aspektverhältnis kann eine Erhöhung der massespezifischen Oberfläche erreicht werden. Unter dem Aspektverhältnis oder Seitenverhältnis der Partikel ist zu verstehen, dass ein Verhältnis von mindestens zwei unterschiedlich langen Seiten des Trägermaterials deutlich voneinander abweichen soll. Die Maße der Trägerobjekte können im Nano- oder im Mikrobereich liegen. Das katalysatormaterialbeschichtete Trägermaterial bildet dann eine elektrisch leitfähige Schicht, welche an die gasdurchlässige Schicht, z. B. eine Membran, ein Gewebe oder ein Netz angehaftet ist.

Insbesondere liegt das Trägermaterial in Form von Stäbchen, Nadeln, Plättchen oder Flakes vor. Der Vorteil der länglichen Form gegenüber sphärischen Partikeln bzw. sphärischen Trägerobjekten liegt in der Verteilung in einem Werkstoff, z.B. in einer Tinte, mittels welcher die katalysatorbeschichteten Trägerobjekte auf die Membran aufgebracht werden. Nur ein Drittel bis zur Hälfte des Materials werden benötigt gegenüber sphärischen Partikeln. Dennoch zeigen die Trägerobjekte wie Stäbchen, Nadeln, Plättchen oder Flakes ein gutes Dispersionsverhalten.

Als Beispiel für Trägerobjekte im Nanopartikel-Bereich seien Titandioxid- Nadeln, exfolierte Schichtsilikate und Metall-Flakes genannt.

Beim Einsatz der erfindungsgemäßen Gasdiffusionselektrode, welche zur Wasserstofferzeugung als Anode oder Kathode verschaltet wird, kommt es zur Bildung von elektrisch leitfähigen Pfaden zwischen den Katalysatorpartikeln, die auf den Trägermaterialien oder Trägerobjekten abgeschieden sind. Auch zwischen den beschichteten Trägermaterialien bzw. -objekten bilden sich innerhalb der fertigen Schicht zusammenhängende elektrisch leitfähige Pfade aus, durch den Kontakt unter den Trägermaterialien bzw. -objekten.

In einer besonders geeigneten Ausführungsform der Erfindung weist die Gasdiffusionselektrode Stäbchen oder Nadeln als Trägermaterial auf, welche eine Länge zwischen 1 und 5 pm, insbesondere zwischen 1 und 3 µm und einen Durchmesser zwischen 0,01 und 1 pm, insbesondere zwischen 0,01 und 0,5 µm aufweisen. Weist die Gasdiffusionselektrode als Trägermaterial Plättchen oder Flakes auf, weisen diese besonders bevorzugt einen Durchmesser in ihrer Flächenausdehnung zwischen 1 und 20 pm, insbesondere zwischen 10 und 20 µm sowie eine Dicke zwischen 0,05 und 4 pm, insbesondere zwischen 1 und 2 µm auf.

In einer besonders bevorzugten Ausführungsform der Erfindung weist die Gasdiffusionselektrode ein Katalysatormaterial auf, welches ein Metall oder ein Metalloxid aus der Gruppe der Übergangsmetalle umfasst, insbesondere aus der Platin- oder Kobaltgruppe. Die elektrokatalytische Wirkung dieser Elemente auf die elektrochemische Wasserspaltung macht sie besonders geeignet. Die Kobaltgruppe enthält die Elemente Kobalt, Rhodium und Iridium. Dies sind alles Schwermetalle. Die Platingruppe, auch Nickelgruppe genannt, umfasst die Elemente Nickel, Palladium und Platin.

In einer besonders vorteilhaften Ausgestaltung der Erfindung weist das Katalysatormaterial Iridium oder Iridiumdioxid auf. Diese Katalysatormaterialien zeichnen sich durch besondere Stabilität und hohe katalytische Wirksamkeit in schwach saurem Medium aus.

In einer weiteren vorteilhaften Ausführungsform der Erfindung weist die Gasdiffusionselektrode ein Trägermaterial auf, welches ein Metalloxid aufweist, insbesondere Titandioxid, Nickeloxid oder Kobaltoxid.

Diese Trägermaterialien haben den Vorteil, in Nadel- oder Flake-Form kommerziell erhältlich zu sein und des Weiteren gut für die Beschichtung mit dem Katalysatormaterial geeignet zu sein.

Zweckdienlicherweise liegt das Katalysatormaterial in einer dünnen Schicht auf der Oberfläche des Trägermaterials vor, wobei die dünne Schicht eine Schichtdicke zwischen einigen Atomlagen und mehreren Nanometern aufweist. Ein besonderer Vorteil liegt in der Kombination des Katalysatormaterials mit einem elektrisch leitfähigen Oxid als Trägermaterial, welche eine Steigerung der Effizienz sowie der elektrochemischen Haltbarkeit bewirkt. Die Katalysatorschicht darf dann auch unterbrochen vorliegen, da sich der Strompfad dann über das leitfähige Oxid ausbilden kann.

Die Aufbringung des Katalysatormaterials auf das Trägermaterial erfolgt bevorzugt mittels eines Wirbelschichtverfahrens. Mittels dieses Wirbelschichtverfahrens können bei Temperaturen über 200 °C metallisches Iridium, unterhalb von 200°C Iridiumdioxid abgeschieden werden.

Bevorzugt wird das Katalysatormaterial mittels Ozon O₃ und wenigstens einem Iridium-Precursor gebildet: Als Iridium-Precursor werden bevorzugt verwendet: Iridium (III)-Acetylacetonat, 1,5-Cyclooctadiene (Acetylacetonato) Iridium (I) 1,5-Cyclooctadiene (Hexafluoroacetylacetonato) Iridium (I), 1-Ethylcyclopentadienyl-1,3-Cyclohexadiene-Iridium (I), (Methylcyclopentadienyl) (1,5-Cyclooctadiene) Iridium (I), Tris (Norbornadiene) (Acetylacetonato) Iridium (III)

Das erfindungsgemäße elektrochemische System zur elektrochemischen Wasserspaltung umfasst eine Kathode, an welcher die Wasserstoffentwicklungsreaktion erfolgt sowie eine Anode, an welcher die Sauerstoffentwicklungsreaktion erfolgt, wobei die Anode als Gasdiffusionselektrode nach einem gemäß der Erfindung ausgestaltet ist. Dieses System hat den Vorteil bei gleicher Effizienz der Wasserstofferzeugung eine reduzierte Katalysatormenge zu benötigen.

In einer vorteilhaften Ausgestaltung der Erfindung weist das elektrochemische System eine Gasdiffusionselektrode gemäß der Erfindung auf, welche Flüssigphase und entstehende Gasphase trennt und das umfasste Katalysatormaterial die Kinetik der zu betreibenden elektrochemischen Umsetzung steigert. Dies hat den Vorteil eines signifikant reduzierten Energiebedarfs für die elektrochemische Umsetzung.

Beispiele und Ausführungsformen der vorliegenden Erfindung werden noch in exemplarischer Weise mit Bezug auf die Figuren 1 bis 11 der angehängten Zeichnung beschrieben:
- Figur 1: zeigt eine schematische Darstellung eines Wirbelbetts, auch Wirbelstromreaktor genannt.
- Figur 2 bis 6: zeigen Beispiele für geeignete Iridium-Precursoren.
- Figur 7: zeigt eine Titandioxidnadel als Trägermaterial für den Iridium basierten Katalysator.
- Figur 8: zeigt einen Nickel- oder Kobaltflake als Trägermaterial für einen Iridium basierten Katalysator.
- Figur 9: zeigt schematisch den Ladungstransport ohne Innenwiderstand zwischen den Beschichtungen.
- Figur 10: zeigt eine Verteilung von Katalysator-Trägermaterial in einer PEM-Elektrolysezelle.
- Figur 11: zeigt eine Verteilung von Katalysator-Trägerpartikeln in einer PEM-Elektrolysezelle.

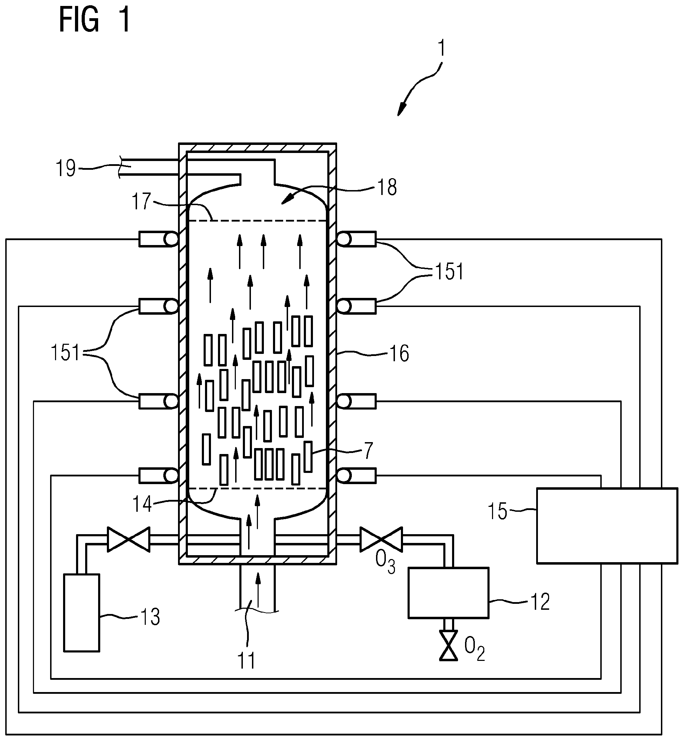

Beispielhaft beschrieben wird nun noch das Beschichtungsverfahren mittels eines Wirbelstromreaktors (FBR, Fluidized bed reactor). Der in Figur 1 gezeigte Wirbelstromreaktor 1 weist zunächst eine Zuleitung 11 für das Trägergas bzw. Fluidisierungsgas im Boden des Reaktors auf. An der Decke des Reaktors ist ein Auslass 19 für Abgase vorgesehen. Das Zentrum des Reaktors bildet die Vakuumkammer 18. Zuleitung 11 und Auslass 19 sind jeweils mit Partikelfiltern 11, 17 versehen. Die zu beschichtenden Trägernadeln 7 befinden sich im Zentrum der Vakuumkammer 18. Die Strömungsrichtung des Trägergases ist mit vertikalen Pfeilen von der Zuleitung 11 hin zum Auslass 19 angezeigt. Die Vakuumkammer 18 ist mit einer Heizvorrichtung 16 ummantelt. An der Außenwand des Reaktors 1 sind mehrere Ultraschallgeber 151 angebracht. Diese sind mit einem Ultraschallgenerator 15 verbunden. Dem Trägergas können über zwei weitere Zuleitungen der Katalysator-Precursor 13 und Ozon O₃ zugeführt werden. Ozon O₃ kann beispielsweise lokal aus Sauerstoff O₂ über einen Ozongenerator 12 erzeugt werden. Das Trägergas, welches als Fluid agiert, tritt durch einen Verteiler 11, 14, welcher am Boden des Reaktors 1 lokalisiert ist, in die Vakuumkammer 18 ein. Das Gas strömt aufwärts durch das sogenannte Partikelbett und übt dabei eine nach oben gerichtete Kraft auf die Partikel, in diesem Fall Nadeln, aus. Die Titandioxidnadeln würden sonst durch ihr Eigengewicht unten im Reaktor liegen. Der Trägergasstrom bewirkt also, dass die Nadeln nach oben ausgerichtet werden und ein fluidisierter Zustand entsteht. Damit die Nadeln 7 nicht aus dem Reaktor 1 gesaugt oder geblasen werden, befinden sich unten und oben im Reaktor 1 Partikelfilter 14, 17. Zur Überwindung der Agglomerationskräfte zwischen den Nadeln 7 sind unterstützende Methoden in Form von Vibration notwendig, damit sich ein fluidisierter Zustand einstellt. Eine Vibration des Wirbelbetts kann durch Ultraschallgeber 151, die an der Außenwand des Reaktors 1 angebracht sind und über einen Ultraschallgenerator 15 gesteuert und geregelt werden. Befinden sich die Nadeln 7 im Reaktor 1, wird über eine Pumpe Luft abgepumpt und zunächst ein Feinvakuum von um die 10⁻³ mbar im Reaktor 1 bzw. in der Vakuumkammer 18 eingestellt. Danach werden die Nadeln 7 in einen fluidisierten Zustand durch das Trägergas überführt. In dem fluidisierten Zustand wird der Reaktorraum 18 über Wärmestrahlung auf 165 bis 195 °C erwärmt. Dazu befindet sich außerhalb des Reaktors ein Heizband oder eine Heizmanschette 16.

Der Beschichtungsvorgang soll beispielhaft im Folgenden beschrieben werden: Als Trägerobjekte 7 werden Titandioxidnadeln verwendet, welche im gezeigten Beispiel eine ATO-Beschichtung aufweisen (ATO - Antimon dotiertes Zinnoxid, Antimon doped Tin-Oxid). Derartige ATO-beschichtete Titandioxidnadeln sind kommerziell erhältlich. Alternativ kann das Trägermaterial eine Titandioxidoberfläche oder eine Niob(V)-Oxidoberfläche aufweisen. Derart elektrisch leitfähige Oxide sind aufgrund ihrer elektrochemischen Haltbarkeit besonders für den beschriebenen Einsatz geeignet. Auf diesen Nadeln kann beispielsweise über chemische oder physikalische oder physikalisch-chemische Synthese- bzw. Abscheideverfahren das Katalysatormaterial aufgebracht werden. Durch die Erhöhung der massespezifischen Oberfläche mittels der Trägermaterialien kann gleichzeitig die Partikelgröße und dadurch die Menge des Katalysatormaterials verringert werden.

Als Katalysatormaterial soll in diesem Beispiel Iridiumdioxid auf den Nadeln 7 abgeschieden werden. Der gewählte Iridium-Precursor wird in einem Gefäß, z. B. einem sogenannten Bubbler 13 als Schutz gegen Luftsauerstoff und Luftfeuchtigkeit aufbewahrt und beispielsweise über einen Thermostaten auf 150°C bis 155°C erhitzt. Für die Beschichtung der Titandioxidnadeln mit ATO-Schicht ist Iridium (III) Acetylacetonat Ir(acac)3 ein besonders geeigneter Iridium-Precursor. Der Bubbler 13 ist mit einem Zuleitungsrohr und einem Entnahmerohr ausgestattet. Über das Zuleitungsrohr gelangt Trägergas, z. B. Stickstoff, in den Bubbler und vermischt sich dort mit dem Ir(acac)3-Dampf. Das Stickstoff-Precursor-Dampfgemisch verlässt dann über das Entnahmerohr den Bubbler und wird über Rohre z. B. mithilfe von Ventilen in den Reaktor 1 geleitet. Der Iridium-Precursor-Strom in den Reaktor 1 wird durch den Dampfdruck des Precursors und den geregelten Durchfluss des Trägergases so kontrolliert und gesteuert, dass eine Monolage Ir(acac)3 auf die ATO-Oberfläche der Titandioxidnadeln chemisorbiert wird.

Anschließend werden überschüssige Iridium-Precursor-Gasmoleküle entfernt und der Reaktor 1 mit einem Inertgas, z. B. Stickstoff N₂ gespült. In einem dritten Schritt wird Ozon O₃ als zweiter Reaktant in den Reaktor 1 eingeleitet. Das Ozon O₃ reagiert mit dem Ir(acac)3-Komplex unter Bildung von Iridiumdioxid IrO₂ und den volatilen CO₂- und H₂O-Molekülen. In einem vierten Schritt werden die volatilen Kohlenstoffdioxid- und Wassermoleküle entfernt. Der Reaktorraum 1 und die beschichteten Nadeln 7 werden mit Stickstoff gespült.
Die zwei beschriebenen schichtbildenden Prozesse und die beiden Spül- und Evakuierungsprozesse zwischen den schichtbildenden Schritten bilden einen Abscheidezyklus, der mehrmals wiederholt werden kann. Jeder Einzelprozess läuft dabei vollständig ab. Der Iridium-Precursor und das Ozon O₃ werden sequenziell in die Reaktorkammer 18 geleitet und auf der Oberfläche der Nadeln 7 so lange chemisorbiert, bis die gesamte Oberfläche der Trägermaterialien belegt ist. Danach finden keine weiteren Adsorptionsvorgänge statt. Die Einwirkdauer der einzelnen Schritte wird so gewählt, dass in einer adäquaten Zeit die gerade eingeleitete Komponente mit der Oberfläche reagiert und der überschüssige Dampf, sowie die Nebenprodukte aus dem Reaktor 1 entfernt werden können. Die Adsorptionszeit von Ir(acac)3, die Spaltungszeit in Iridiumdioxid IrO₂ und Kohlenstoffdioxid CO₂ und Wasser H₂O und die Spülzeiten zwischen den schichtbildenden Vorgängen liegen in der Größenordnung von Sekunden. Durch diese Art der Prozessführung begrenzen sich die Oberflächenreaktionen selbst, sodass eine reproduzierbare Iridiumdioxidschicht mit kalkulierbarer Zusammensetzung abgeschieden werden kann. Die Iridiumdioxidschicht wächst mit jedem Abscheidezyklus weiter.

Bei der beschriebenen Atomlagenabscheidung wachsen Iridiumoxidfilme nur bei Temperaturen unter 200 °C. Soll metallisches Iridium abgeschieden werden, so muss man Temperaturen über 200 °C bevorzugt von 225 bis 375 °C wählen und als zweiten Reaktanten Sauerstoff O₂ einsetzen.

Beim ozonbasierten Prozess und bei Temperaturen unter 200 °C werden die Ir(acac)3-Moleküle stöchiometrisch, das heißt molekular oder dissoziativ auf der Oberfläche adsorbiert. Die Nebenprodukte Kohlenstoffdioxid und Wasser bei der Atomlagenabscheidung von Iridiumdioxid mittels Ir(acac)3-Precursor entstehen nur während des Ozonpulses. Die Sauerstoffatome im Iridiumdioxid reagieren nicht oxidativ auf den Precursor Ir(acac)3. Somit kann sich ein Iridiumdioxidfilm bilden. Beim sauerstoffbasierten Prozess und Temperaturen über 200 °C würden die Ir(acac)3-Moleküle reaktiviert adsorbiert, was bedeutet, dass die Sauerstoffatome auf dem Iridium mit den adsorbierten Ir(acac)3-Molekülen bei über 225 °C zu Iridium, Wasser und Kohlenstoffdioxid reagieren. Bei Temperaturen über 200 °C würde also anstelle von Iridiumdioxid metallisches Iridium abgeschieden.

Zwar zeigt die metallische Iridium-Beschichtung bei dieser Art der Prozessführung die höheren Werte in der elektrochemischen Aktivität. Aber bei einer Iridium-Beschichtung mit Ozon als zweitem Reaktanten bei Prozesstemperaturen größer als 200°C ist in der Durchführung folgendes zu beachten. Ozon kann nicht vorrätig gehalten werden, da Ozon sofort in molekularen Sauerstoff O₂ und atomaren Sauerstoff 0 zerfällt. Ozon wird daher über einen Ozongenerator aus Sauerstoff hergestellt, in dem Sauerstoffmoleküle durch elektrische Entladung in Sauerstoffatome gespalten werden. Sauerstoff O₂ kann aus einer Gasflasche entnommen werden. Die abgespaltenen Sauerstoffatome verbinden sich mit weiteren Sauerstoffmolekülen zu Ozonmolekülen. Da bei Temperaturen über 200°C die Sauerstoffatome auf dem Iridium mit den adsorbierten Ir(acac)3-Molekülen zu Iridium, Wasser und Kohlenstoffdioxid reagieren, ist der Prozess von der Herkunft des am Iridium gebundenen Sauerstoffs unabhängig. Die Zuführung von Sauerstoff aus der Gasflasche ist einfacher und billiger als der Umweg über die Ozonherstellung. Bei der Bildung von Iridiumdioxid unterhalb von 200°C wird die oxidative Wirkung des Ozons beim Zerfall in Sauerstoffmoleküle O₂ und Sauerstoffatome 0 ausgenutzt.

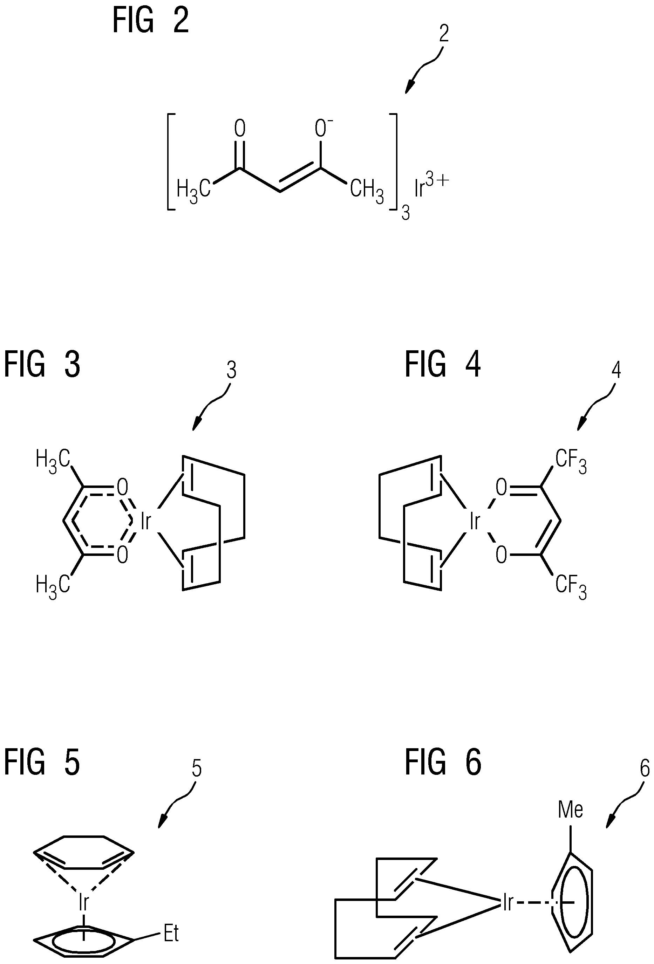

Alternativ zum Ir(acac)3 vgl. Figur 2 können auch die folgenden Iridium-Precursoren in dem beschriebenen Beschichtungsverfahren eingesetzt werden: 1,5-Cyclooctadiene(Acetylacetonato)Iridium(I), vgl. Figur 3. 1,5-Cyclooctadiene(Hexafluoroacetylacetonato)Iridium(I), vgl. Figur 4.1-Ethylcyclopentadienyl-1,3-Cyclohexadiene-Iridium(I), vgl. Figur 5 sowie (Methylcyclopentadienyl)(1,5-Cyclooctadiene)Iridium(I), vgl. Figur 6.
Von den Precursor-Molekülen verbleibt final lediglich das Iridiumatom gebunden als Iridiumdioxid auf der Oberfläche der Trägermaterialien. Das übrige Molekül verlässt, meistens gespalten durch den Sauerstoff oder Ozon in Wasser und Kohlendioxid, den Reaktor 1 in einem der Spülprozesse.

Alternativen zu Iridium(oxid)-Katalysatoren sind beispielsweise andere Metalloxide oder Metalldioxide aus der Platingruppe. Neben Iridiumdioxid zeigt auch Rutheniumdioxid RuO₂ eine sehr geringe Überspannung beim Übergang von einer niedrigen eine höhere Oxidationsstufe und damit eine hohe Aktivität für eine Sauerstoffentwicklung. In beiden Fällen würde die Adsorption der sauerstoffhaltigen Zwischenstufen für einen zügigen Ladungsdurchtritt ausreichen und der Sauerstoff nach weiteren Reaktionen wieder freigesetzt werden. Lediglich bei der chemischen Stabilität liegt der Vorteil wieder bei Iridiumdioxid gegenüber Rutheniumdioxid, welches während der Sauerstoffentwicklung in saurem Milieu unter Bildung von Rutheniumoxid RuO(IV) oder H₂RuO(V) korrodieren würde. Iridiumdioxid ist im sauren Milieu wesentlich stabiler und zeigt trotzdem noch eine ausreichende Aktivität zur Sauerstoffentwicklung.

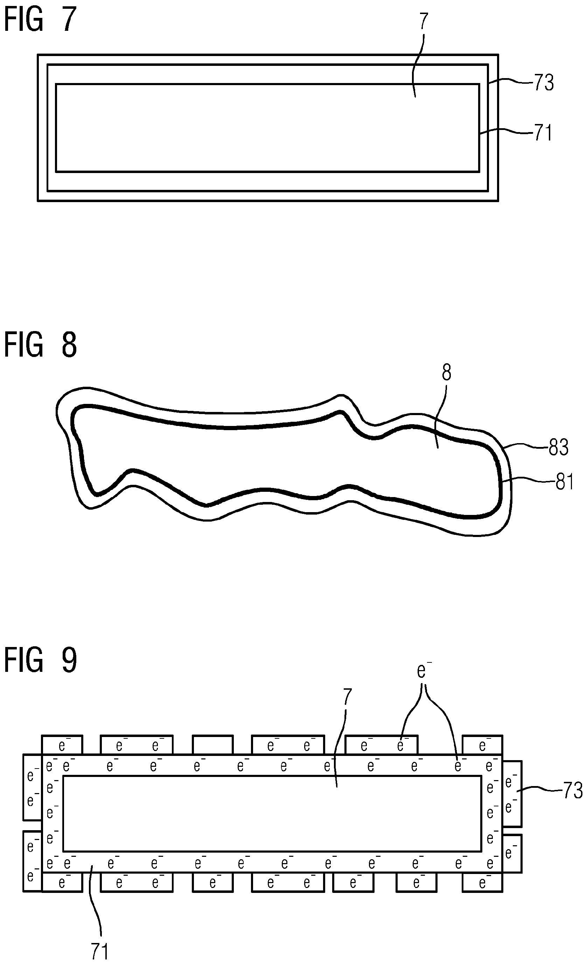

Die Figuren 7, 8 und 9 zeigen Beispiele für Trägermaterialien bzw. Trägerobjekte 7, 8: Diese sind nadelförmig 7 oder flakeförmig 8 ausgeführt. Als Beispiel für ein nadelförmiges Trägermaterial 7 wurden bereits Titandioxidnadeln mit einer ATO-Beschichtung 71 beschrieben. Die Iridiumdioxidschicht 73 würde so abgeschieden werden, dass die gesamte ATO-Oberfläche von Iridiumdioxid 73 bedeckt ist. Alternativ zur Nadelform 7 können auch Flakes 8 oder andersartige Granulate mit ausreichend hohem Aspektverhältnis aus Metall oder Metalloxiden als Trägermaterial für den Iridium- oder Iridiumoxid-Katalysator verwendet werden. Als weiteres Beispiel sei ein Nickelflake gezeigt, vgl. Figur 8, welcher eine irreguläre Morphologie aufweist. Das Aspektverhältnis von Flächendurchmesser zu Dicke des Flakes 8 beträgt insbesondere um zwischen 10 und 12.

Alternativ zu den Nickelflakes 8 kann beispielsweise auch Kobaltgranulat verwendet werden. In beiden Fällen, Nickel und Kobalt, sind die Trägermaterialien mit einer natürlichen Oxidschicht 81 umgeben und zeigen von allen Gruppenmetallen die niedrigste Überspannung beim Übergang von einer niedrigen in eine höhere Oxidationsstufe sowie eine niedrige Enthalpie für die Adsorption von Sauerstoffatomen an die Katalysatoroberfläche. Für die Beschichtung der Flakes 8 mit Iridium oder Iridiumdioxid 73, 83 kann das gleiche in Verbindung mit Figur 1 beschriebene Beschichtungsverfahren eingesetzt werden.

In den Figuren 7 und 8 sind die Schichtabfolgen gezeigt: Die Nadel 7 ist zunächst mit der ATO-Schicht 71 und dann mit der Iridiumdioxidschicht 73 ummantelt, der Nickelflake oder Kobaltflake 8 weist eine natürliche native Oxidschicht 81 auf, auf der der iridium- oder iridiumdioxidhaltige Katalysator 83 abgeschieden wird. Als Trägermaterialien kommen generell Metalle oder keramische Metalloxide zum Einsatz.

Durch die Darstellung der Ladungsverteilung e⁻ in Figur 9 soll verdeutlicht werden, dass eine elektrisch leitfähige ATO-Schicht 71 einen funktionalen Vorteil bietet, nämlich dass die Iridium- oder Iridiumdioxidschicht auch unterbrochen sein darf und sich dennoch zwischen den Iridium basierten Aktivzentren elektrisch leitfähige Pfade ausbilden. Durch die großflächige Verteilung der aktiven Materialien kommt es zu einer verbesserten Katalysatorausnutzung und damit zur Einsparung von Katalysatormaterial.

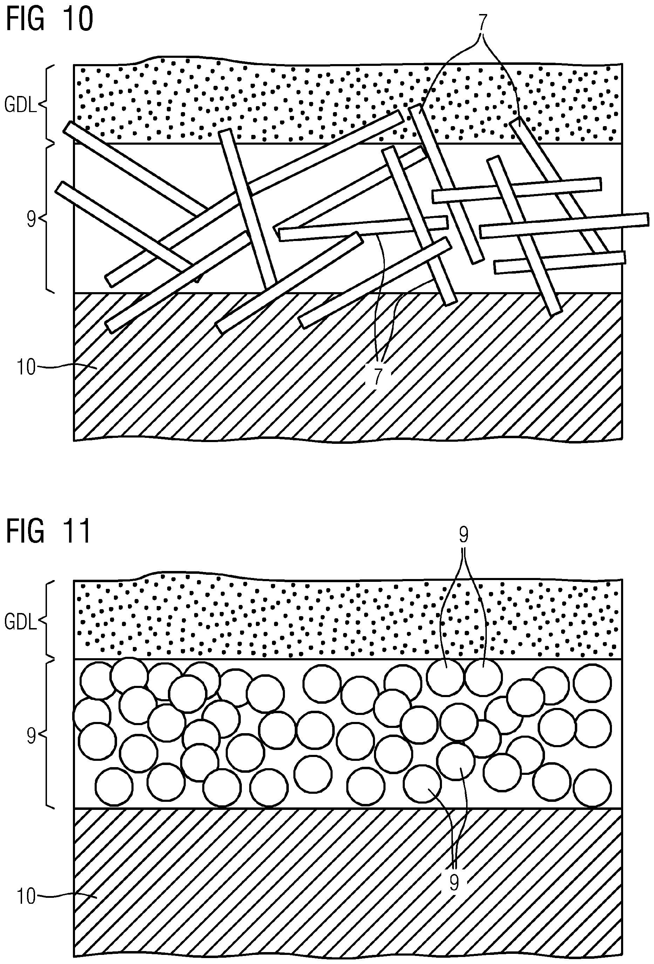

Die Figuren 10 und 11 sollen zur Verdeutlichung des Effektes des hohen Aspektverhältnisses der eingesetzten Trägermaterialien 7 führen. Das Aspektverhältnis der verwendeten Nadeln oder Stäbchen beträgt bevorzugt mindestens 2, insbesondere mindestens 5 oder mindestens 10.

Zweckdienlicherweise wird zur Auftragung der Trägermaterialien auf die Membran, das Netz oder Gitter der Gasdiffusionselektrode ein Verbund von Partikeln und einem weiteren Werkstoff genutzt, z. B. einer Tinte oder allgemeinen Lösung. Werden also Katalysatorpartikel mittels z. B. einer 15- bis 20%igen Nafion-Ionomerlösung verarbeitet und zur Elektrode eines PEM-Elektrolyseurs verarbeitet, ergeben sich deutliche Unterschiede in der Verteilung von Nadeln und sphärischen Partikeln in dem Werkstoff. Aufgrund der geometrischen Form wird in den Elektroden deutlich weniger Material benötigt als mit sphärischen Partikeln. Nur die Hälfte bis zu einem Drittel der Masse an Trägermaterial und entsprechend an Katalysatormaterial wird im Vergleich zum Einsatz von sphärischen Partikeln verbraucht. Durch den Einsatz von Trägermaterialien dieser besonderen geometrischen Form Nadeln, Flakes, Plättchen führt zu dem Vorteil, ein besseres Verhältnis von Oberfläche zu Volumen aufzuweisen. Aufgrund der länglichen Form werden die beschichteten Nadeln oder Flakes die Oberfläche nicht vollständig bedecken, wie es bei sphärischen Partikeln, vgl. Figur 11, der Fall wäre. Des Weiteren sind die Trägerobjekte 7, 8 nicht vollständig von der Tinte bedeckt, sondern ragen aus der Schicht heraus. Damit haben diese Elektrodenschichten einen engeren Kontakt zu der Polymermembran, auf die sie aufgebracht werden und dementsprechend einen engeren Kontakt zum Stromkollektor. Dies fördert einen schnellen Ladungsübertrag. Über den Kontakt zwischen den leitfähigen Nadeln oder Flakes bilden sich zusammenhängende elektrisch leitfähige Pfade aus. Durch den Einsatz von Nadeln oder Flakes wird also die Abhängigkeit von limitierten Iridiumressourcen entschärft und ein industrieller Einsatz und eine Skalierung möglich.

Die beschriebene Gasdiffusionselektrode mit Iridium- oder Iridiumdioxid-Katalysatoren auf nadelförmigen oder plättchenförmigen Trägermaterialien wird besonders bevorzugt in einer elektrochemischen Zelle zur Wasserspaltung eingesetzt. Eine derartige elektrochemische Zelle ist bevorzugt mit einer Gasdiffusionselektrode als Anode zur Entweichung des Sauerstoffs und einer Gasdiffusionselektrode als Kathode für den Durchtritt des erzeugten Wasserstoffgases aufgebaut, wobei Anoden- und Kathodenraum durch eine Protonen-Austausch-Membran (PEM) getrennt sind. Mittels der erfindungsgemäßen Verarbeitung des Katalysatormaterials wird dessen Gewichtseinsatz deutlich reduziert und die elektrokatalytische Effizienz verbessert, wodurch sich Betriebs- und Investitionskosten eines derartigen elektrochemischen Systems zur Wasserspaltung verringern. Gleichzeitig nimmt die Skalierbarkeit zu und die Abhängigkeit von den limitierten Iridiumressourcen wird entschärft und macht einen industriellen Einsatz möglich. Durch die erfindungsgemäße Aufbringung des Katalysatormaterials auf die Trägerobjekte mit hohem Aspektverhältnis werden die elektrokatalytisch aktiven Zentren optimal über die Elektrodenfläche verteilt.

Das beschriebene Wirbelbettverfahren ist besonders geeignet nur wenige Atomlagen des limitierten Katalysatormaterials auf die Trägermaterialien aufzubringen. Der beschriebene ALD-Prozess (Atomic Layer Deposition) macht die Schichtdicke und -zusammensetzung kalkulierbar und reproduzierbar. Ein weiterer Vorteil des beschriebenen ALD-Prozesses liegt darin, dass die elektrochemisch aktiven Materialien derart nahtlos aneinandergefügt werden, dass zwischen den Schichten nur ein vernachlässigbarer elektrischer Innenwiderstand vorherrscht und ein Ladungstransport quasi ohne Hindernis erfolgen kann. Ein weiterer Vorteil, dieses ALD-Verfahren einzusetzen liegt darin, dass sehr dünne, homogene und konforme Beschichtungen mit gewünschter Stöchiometrie erzeugt werden können. Außerdem werden Verunreinigungen beispielsweise durch anorganische Anionen wie Chloride, Reduktionsmittel oder Tenside vermieden. Da die Iridium basierten Aktivkomponenten aus der Gasphase über entsprechende Precursoren auf das Trägermaterial abgeschieden werden, können größere Partikelanhäufungen und Agglomerate vermieden werden. Dadurch lassen sich die Katalysatoren auch besonders gut über die gesamte Elektrodenoberfläche verteilen, was zu einer deutlichen Erhöhung der aktiven Zentren führt (gegenüber Partikelanhäufungen). Die Massenaktivität an Iridium wird also gesteigert, da das eingesetzte Iridium optimaler verteilt wird und damit kann Iridium eingespart werden.
Die geringen Schichtdicken des Katalysatormaterials im atomaren und Nanometerbereich ermöglichen Tunneleffekte und Hopping-Mechanismen für die Elektronenleitung. Die Elektronen können schneller von einem lokalisierten Zustand in einen benachbarten Zustand springen, da die Abstände zwischen den Schichten und Partikeln sehr kurz sind. Bei Ausfall einiger Iridium- oder Iridiumdioxid-Partikel oder gar ganzer Schichtbereiche, z. B. durch Degradation im sauren Medium, können die intakten Partikel oder intakten Schichtbereiche die Wasserkatalyse aufrechterhalten, vgl. Figur 9. Dies wird besonders von Trägermaterialien unterstützt, die an der Oberfläche eine spezielle elektrisch leitfähige Beschichtung wie ATO aufweisen.

### Bezugszeichenliste

- 1: Wirbelschichtbett (Fluidized bed reactor)
- 11: Trägergas, Fluidisierungsgas
- 12: Ozongenerator
- O₂: Sauerstoff
- O₃: Ozon
- 13: Iridium-Precursor
- 14: Partikelfilter
- 15: Ultraschallgenerator
- 151: Ultraschallgeber
- 16: Heizung
- 17: weiterer Partikelfilter
- 18: Vakuumkammer
- 19: Abgase
- 2: Trägermaterial/Titandioxidnadel
- 7: Trägermaterial/Titandioxidnadel
- 71: ATO-Schicht
- 81: natives Oxid
- 73, 83: Iridiumoxid
- 13: Iridium-Precursor
- E-: Elektronen
- 10: Polymermembran
- 9: Elektrodenschicht
- 97: Partikel
- GDL: Stromkollektor (Gas Diffusion Layer)

## Patentansprüche

1. Gasdiffusionselektrode aufweisend eine gasdurchlässige Schicht (10) (Membran, Gewebe, Netz) und eine elektrisch leitfähige Schicht (9), wobei die elektrisch leitfähige Schicht (9) ein Katalysatormaterial aufweist, welches auf einem Trägermaterial (7, 8) aufgebracht ist, wobei die Maße des Trägermaterials (7, 8) im Nano- oder Mikrobereich liegen und die Geometrien des Trägermaterials ein hohes Aspektverhältnis aufweisen.

2. Gasdiffusionselektrode nach Anspruch 1, wobei das Trägermaterial (7, 8) in Form von Stäbchen, Nadeln, Plättchen oder Flakes vorliegt.

3. Gasdiffusionselektrode nach Anspruch 2, wobei die Stäbchen oder Nadeln (7) eine Länge zwischen 1 und 5 pm, insbesondere zwischen 1 und 3 pm, und einen Durchmesser zwischen 0,01 und 1 pm, insbesondere zwischen 0,01 und 0,5 µm aufweisen.

4. Gasdiffusionselektrode nach Anspruch 2, wobei die Plättchen oder Flakes (8) einen Durchmesser in ihrer Flächenausdehnung zwischen 1 und 20 pm, insbesondere zwischen 10 und 20 pm, und eine Dicke zwischen 0,05 und 4 pm, insbesondere zwischen 1 und 2 µm aufweisen.

5. Gasdiffusionselektrode nach einem der vorstehenden Ansprüche, wobei das Katalysatormaterial ein Metall oder Metalloxid aus der Gruppe der Übergangsmetalle aufweist, insbesondere aus der Platin- oder Cobalt-Gruppe.

6. Gasdiffusionselektrode nach einem der vorstehenden Ansprüche, wobei das Katalysatormaterial insbesondere Iridium (Ir) oder Iridiumdioxid (IrO₂) aufweist.

7. Gasdiffusionselektrode nach einem der vorstehenden Ansprüche, wobei das Trägermaterial (7, 8) ein Metalloxid aufweist, insbesondere Titandioxid, Nickeloxid oder Cobaltoxid.

8. Gasdiffusionselektrode nach einem der vorstehenden Ansprüche, wobei das Katalysatormaterial in einer dünnen Schicht (73, 83) auf der Oberfläche des Trägermaterials (7, 8) vorliegt, wobei die dünne Schicht (73, 83) eine Schichtdicke zwischen einigen Atomlagen und mehreren Nanometern aufweist.

9. Gasdiffusionselektrode nach einem der vorstehenden Ansprüche, wobei das Katalysatormaterial mittels eines Wirbelschichtverfahrens (1) auf das Trägermaterial (7, 8)aufgebracht wurde.

10. Gasdiffusionselektrode nach Anspruch 6 und 9, wobei das Katalysatormaterial mittels Ozon (O₃) und wenigstens einem Iridiumprecursor (13) gebildet wurde.

11. Gasdiffusionselektrode nach Anspruch 10, wobei als Iridiumprecursor (13) Iridium(III)acetylacetonat, 1,5-Cyclooctadiene(acetylacetonato)iridium(I), 1,5-Cyclooctadiene(hexafluoroacetylacetonato)iridium(I), 1-Ethylcyclopentadienyl-1,3-cyclohexadiene-iridium(I), (Methylcyclopentadienyl)(1,5-cyclooctadiene)iridium(I) oder Tris(norbornadiene)(acetylacetonato)iridium (III) verwendet wurden.

12. Elektrochemisches System zur elektrochemischen Wasserspaltung umfassend eine Kathode, an welcher die Wasserstoffentwicklungsreaktion erfolgt und eine Anode, an welcher die Sauerstoffentwicklungsreaktion erfolgt, wobei die Anode als Gasdiffusionselektrode nach einem der Ansprüche 1 bis 11 ausgestaltet ist.

13. Elektrochemisches System nach Anspruch 12, wobei die Gasdiffusionselektrode Flüssigphase und entstehende Gasphase trennt und das umfasste Katalysatormaterial die Kinetik der zu betreibenden elektrochemischen Umsetzung steigert.
